# EUROPEAN PATENT SPECIFICATION

(11) **EP 3 966 274 B1**
(45) Date of publication and mention of the grant of the patent: **24.12.2025**
(21) Application number: 20799529.1
(22) Date of filing: 22.04.2020
(51) Int. Cl.: B29D 22/02, C08J 3/24, F16F 9/04, B29C 35/02, B29C 35/00, C08K 5/21, C08K 3/30, C08K 3/22, C08K 5/02, C08K 5/19, C08L 21/00, B29L 31/00, F16F 9/05

(54) **AIR SPRING BELLOWS MADE BY PROCESSES EMPLOYING A EUTECTIC MIXTURE**
IN EINEM VERFAHREN MIT EINEM EUTEKTISCHEN GEMISCH HERGESTELLTE LUFTFEDERBALGE
SOUFFLET DE RESSORT PNEUMATIQUE RÉALISÉ PAR DES PROCÉDÉS UTILISANT UN MÉLANGE EUTECTIQUE

(30) Priority: 30.04.2019 US 201962840546 P
(43) Date of publication of application: 16.03.2022
(73) Proprietor: Firestone Industrial Products Company, LLC, Nashville, TN 37201 (US)
(72) Inventor: HOWARD, Michael C., Noblesville, Indiana 46062 (US)
(74) Representative: Kraus & Lederer PartGmbB
(86) International application number: PCT/US2020/029313
(87) International publication number: WO 2020/223080

(56) References cited:
- WO-A1-2018/053395
- WO-A2-2018/167315
- CN-A- 103 752 214
- US-A- 2 590 737
- US-A1- 2014 217 656
- US-A1- 2015 167 771
- US-A1- 2015 167 771
- KOCZOROWSKA E. ET AL: "Eutectic alloys in sulfur-based rubber vulcanizing systems and related problems", JOURNAL OF APPLIED POLYMER SCIENCE, vol. 79, no. 11, 1 January 2001 (2001-01-01), US, pages 1929 - 1941, XP055817289, ISSN: 0021-8995, DOI: 10.1002/1097-4628(20010314)79:11<1929::AID-APP1000>3.0.CO;2-R

## Description

### FIELD OF THE INVENTION

Embodiments of the present invention are directed toward air spring bellows made by processes that include sulfur curing a vulcanizable rubber composition including a eutectic composition.

### BACKGROUND OF THE INVENTION

Air springs, or pneumatic suspension devices, have been used to isolate road disturbances from a vehicle, seat, or cab. An air spring, as part of a vehicle's suspension, supports the vehicle's load or mass at each axle. Typically, each axle of a vehicle associated with an air spring supports the mass component or load carried by the axle. In addition, there may be ancillary air springs that support driver comfort in and around the driver's compartment, or cab. In an air spring, a volume of gas, usually air, is confined within a flexible container. As an air spring is compressed (jounce travel), the pressure of the gas within the air spring increases; and as an air spring extends (rebound travel), the pressure of the gas within the air spring decreases. Road disturbances are mainly absorbed by this compression and extension of the air springs as a function of work (*w* = ∫ *F · dx*). Air springs are often engineered to have a specific spring rate or spring constant, thereby controlling jounce and rebound characteristics for the desired application and for comfort.

Because an air spring may undergo countless cycles between compression and extension, the air spring must include an enclosure container for the gas that is flexible and durable. Typically, these enclosures are referred to as bellows or airsleeves and are made of cord-(fabric or metal) reinforced rubber compositions. Cord-fabric may be, but is not limited to, natural or synthetic materials.

These air spring bellows are typically prepared by compounding the base polymer with appropriate fillers, processing oils, and other desired ingredients such as plasticizers, antioxidants, etc. to form a green member. The green member is then cured by vulcanizing the base polymer in the presence of one or more vulcanizing agents and/or compatible vulcanizing accelerators.

Document US 2015/167771 A1 discloses a method of preparing a cured air spring bellow comprising preparing a vulcanizable composition, preparing a green member using the vulcanizable composition and curing the green member to form the cured air spring bellow.

Where the base polymer is sulfur vulcanized, zinc oxide is typically employed as an essential ingredient, which is typically used in combination with stearic acid. It is believed that zinc species and/or zinc oxide serve as an activator for the sulfur crosslinking. It is also believed that the zinc oxide and stearic acid form, *in situ,* zinc species, and in combination with the zinc oxide, the rate and quality of the sulfur vulcanization process is impacted.

### DESCRIPTION OF THE DRAWINGS

Fig. 1 is a perspective view of an exemplary air spring according to one or more embodiments of the present invention.
Fig. 2 is a perspective view of an exemplary air spring according to one or more embodiments of the present invention.
Fig. 3 is a perspective view of an exemplary air spring according to one or more embodiments of the present invention.
Fig. 4 is a cutaway view of an exemplary airsleeve showing its layered construction.

### SUMMARY OF THE INVENTION

The present invention is concerned with a method of preparing a cured air spring bellow according to claim 1 and with an air spring bellow according to claim 8.

Other embodiments of the present disclosure provide a process for preparing an air spring bellows rubber vulcanizate comprising providing a vulcanizable composition of matter including a vulcanizable elastomer, a sulfur-based curative, zinc oxide, and a eutectic composition; and heating the vulcanizable composition to thereby effect vulcanization.

Yet other embodiments of the present disclosure provide an air spring having an airsleeve having a plurality of layers, where at least one layer of said airsleeve includes a rubber component made by a process employing a eutectic composition.

Still other embodiments of the present disclosure provide an air spring bellows rubber vulcanizate comprising a vulcanized rubber network including a metal compound dispersed throughout the rubber network, the rubber network including less than 2 parts by weight zinc oxide per 100 parts by weight rubber.

Yet other embodiments of the present disclosure provide a method for preparing a vulcanizable composition of matter useful for forming an air spring bellow, the method comprising combining a vulcanizable elastomer, a curative, and a eutectic composition.

### DETAILED DESCRIPTION OF ILLUSTRATIVE EMBODIMENTS

Embodiments of the present invention are based, at least in part, on the discovery of a method of preparing an air spring bellows. In one or more embodiments, the method may include providing a vulcanizable composition of matter including a vulcanizable rubber, a curative, zinc oxide, and a eutectic composition; and heating the vulcanizable composition to thereby effect vulcanization to produce a cured air spring bellow. It is contemplated that by including the eutectic composition in the vulcanizable composition, the total loading of metal compounds that are necessary to achieve a desired cure can be appreciably reduced without a deleterious impact on cure rate and/or cure quality of the rubber. Accordingly, embodiments of the invention provide cured air spring bellows having relatively low levels of metal, such as zinc, and a technologically useful level of cure.

### VULCANIZABLE COMPOSITIONS

As indicated above, a eutectic composition is included in a vulcanizable composition for the production of a cured air spring bellow. In addition to the eutectic composition, the vulcanizable compositions of one or more embodiments include a vulcanizable rubber, a filler, a curative (e.g. a sulfur-based curative), stearic acid, and a metal compound, such as zinc oxide or derivatives zinc oxide. Other optional ingredients may also be included such as, but not limited to, processing and/or extender oils, resins, waxes, cure accelerators, scorch inhibitors, antidegradants, antioxidants, plasticizers, and other rubber compounding additives known in the art.

### EUTECTIC MIXTURE

In one or more embodiments, a eutectic composition includes those compositions formed by combining two or more compounds that provide a resultant combination having a melting point lower than the respective compounds that are combined. For purposes of this specification, eutectic composition may be referred to as a eutectic mixture, eutectic complex, or eutectic pair. Each of the compounds that are combined may be referred to, respectively, as a eutectic ingredient, eutectic constituent, eutectic member, or compound for forming a eutectic composition (e.g. first and second compound). Depending on the relative amounts of the respective eutectic ingredients, as well as the temperature at which the observation is made, the eutectic composition may be in the form of a liquid, which may be referred to as a eutectic liquid or eutectic solvent. For a given composition, where relative amounts of the respective ingredients are at or proximate to the lowest melting point of the eutectic mixture, then the composition may be referred to as a deep eutectic solvent, which may be referred to as DES.

Without wishing to be bound by any particular theory, it is believed that the eutectic ingredients combine or otherwise react or interact to form a complex. Thus, any reference to eutectic mixture, or eutectic combination, eutectic pair, or eutectic complex will include combinations and reaction products or complexes between the constituents that are combined and yield a composition having a lower melting point than the respective constituents. For example, in one or more embodiments, useful eutectic compositions can be defined by the formula I:

Cat⁺X⁻zY

where Cat⁺ is a cation, X⁻ is a counter anion (e.g. Lewis Base), and z refers to the number of Y molecules that interact with the counter anion (e.g. Lewis Base. For example, Cat⁺ can include an ammonium, phosphonium, or sulfonium cation. X⁻ may include, for example, a halide ion. In one or more embodiments, z is a number that achieves a deep eutectic solvent, or in other embodiments a number that otherwise achieves a complex having a melting point lower than the respective eutectic constituents.

According to the invention, a useful eutectic composition includes a combination of an acid and a base, where the acid and base may include Lewis acids and bases or Bronsted acids and bases. In one or more embodiments, useful eutectic compositions include a combination of a quaternary ammonium salt with a metal halide (which are referred to as Type I eutectic composition), a combination of a quaternary ammonium salt and a metal halide hydrate (which are referred to as Type II eutectic composition), a combination of a quaternary ammonium salt and a hydrogen bond donor (which are referred to as Type III eutectic composition), or a combination of a metal halide hydrate and a hydrogen bond donor (which are referred to as Type IV eutectic composition). Analogous combinations of sulfonium or phosphonium in lieu of ammonium compounds can also be employed and can be readily envisaged by those having skill in the art.

### QUATERNARY AMMONIUM SALT

In one or more embodiments, the quaternary ammonium salt is a solid at 20 °C. In these or other embodiments, the metal halide and hydrogen bond donor are solid at 20 °C.

In one or more embodiments, useful quaternary ammonium salts, which may also be referred to as ammonium compounds, may be defined by the formula II:

(R₁)(R₂)(R₃)(R₄) -N⁺- Φ⁻

where each R₁, R₂, R₃, and R₄ is individually hydrogen or a monovalent organic group, or, in the alternative, two of R₁, R₂, R₃, and R₄ join to form a divalent organic group, and Φ⁻ is a counter anion. In one or more embodiments, at least one, in other embodiments at least two, and in other embodiments at least three of R₁, R₂, R₃, and R₄ are not hydrogen.

In one or more embodiments, the counter anion (e.g. Φ⁻) is selected from the group consisting of halide (X⁻), nitrate (NO₃⁻), tetrafluoroborate (BF₄⁻), perchlorate (ClO₄⁻), triflate (SO₃CF₃⁻), trifluoroacetate (COOCF₃⁻). In one or more embodiments, Φ⁻ is a halide ion, and in certain embodiments a chloride ion.

In one or more embodiments, the monovalent organic groups include hydrocarbyl groups, and the divalent organic groups include hydrocarbylene groups. In one or more embodiments, the monovalent and divalent organic groups include a heteroatom, such as, but not limited to, oxygen and nitrogen, and/or a halogen atom. Accordingly, the monovalent organic groups may include alkoxy groups, siloxy groups, ether groups, and ester groups, as well as carbonyl or acetyl substituents. In one or more embodiments, the hydrocarbyl groups and hydrocarbylene group include from 1 (or the appropriate minimum number) to about 18 carbon atoms, in other embodiments from 1 to about 12 carbon atoms, and in other embodiments from 1 to about 6 carbon atoms. The hydrocarbyl and hydrocarbylene groups may be branched, cyclic, or linear. Exemplary types of hydrocarbyl groups include alkyl, cycloalkyl, aryl and alkylaryl groups. Exemplary types of hydrocarbylene groups include alkylene, cycloalkylene, arylene, and alkylarylene groups. In particular embodiments, the hydrocarbyl groups are selected from the group consisting of methyl, ethyl, octadecyl, phenyl, and benzyl groups. In certain embodiments, the hydrocarbyl groups are methyl groups, and the hydrocarbylene groups are ethylene or propylene group.

Useful types of ammonium compounds include secondary ammonium compounds, tertiary ammonium compounds, and quaternary ammonium compounds. In these or other embodiments, the ammonium compounds include ammonium halides such as, but not limited to, ammonium chloride. In particular embodiments, the ammonium compound is a quaternary ammonium chloride. In certain embodiments, R₁, R₂, R₃, and R₄ are hydrogen, and the ammonium compound is ammonium chloride. In one or more embodiments, the ammonium compounds are asymmetric.

In one or more embodiments, the ammonium compound includes an alkoxy group and can be defined by the formula III:

(R₁)(R₂)(R₃)-N⁺-(R₄-OH) Φ⁻

where each R₁, R₂, and R₃ is individually hydrogen or a monovalent organic group, or, in the alternative, two of R₁, R₂, and R₃ join to form a divalent organic group, R₄ is a divalent organic group, and Φ⁻ is a counter anion. In one or more embodiments, at least one, in other embodiments at least two, and in other embodiments at least three of R₁, R₂, are R₃ are not hydrogen.

Examples of ammonium compounds defined by the formula III include, but are not limited to, N-ethyl-2-hydroxy-N,N-dimethylethanaminium chloride, 2-hydroxy -N,N,N-trimethylethanaminium chloride (which is also known as choline chloride), and N-benzyl-2-hydroxy-N,N-dimethlethanaminium chloride.

In one or more embodiments, the ammonium compound includes a halogen-containing substituent and can be defined by the formula IV:

Φ⁻-(R₁)(R₂)(R₃)-N⁺-R₄X

where each R₁, R₂, and R₃ is individually hydrogen or a monovalent organic group, or, in the alternative, two of R₁, R₂, and R₃ join to form a divalent organic group, R₄ is a divalent organic group, X is a halogen atom, and Φ⁻ is a counter anion. In one or more embodiments, at least one, in other embodiments at least two, and in other embodiments at least three of R₁, R₂, and R₃ are not hydrogen. In one or more embodiments, X is chlorine.

Examples of ammonium compounds defined by the formula III include, but are not limited to, 2-chloro-N,N,N-trimethylethanaminium (which is also referred to as chlorcholine chloride), and 2-(chlorocarbonyloxy)-N,N,N-trimethylethanaminium chloride.

### HYDROGEN-BOND DONOR COMPOUNDS

In one or more embodiments, the hydrogen-bond donor compounds, which may also be referred to as HBD compounds, include, but are not limited to, amines, amides, carboxylic acids, and alcohols. In one or more embodiments, the hydrogen-bond donor compound includes a hydrocarbon chain constituent. The hydrocarbon chain constituent may include a carbon chain length including at least 2, in other embodiments at least 3, and in other embodiments at least 5 carbon atoms. In these or other embodiments, the hydrocarbon chain constituent has a carbon chain length of less than 30, in other embodiments less than 20, and in other embodiments less than 10 carbon atoms.

In one or more embodiments, useful amines include those compounds defined by the formula:

R₁-(CH₂)ₓ-R₂

wherein R₁ and R₂ are -NH₂, -NHR₃, or -NR₃R₄, and x is an integer of at least 2. In one or more embodiments, x is from 2 to about 10, in other embodiments from about 2 to about 8, and in other embodiments from about 2 to about 6.

Specific examples of useful amines include, but are not limited to, aliphatic amines, ethylenediamine, diethylenetriamine, aminoethylpiperazine, triethylenetetramine, tris(2-aminoethyl)amine, N,N'-bis-(2aminoethyle)piperazine, piperazinoethylethylenediamine, and tetraethylenepentaamine, propyleneamine, aniline, substituted aniline, and combinations thereof.

In one or more embodiments, useful amides include those compounds defined by the formula:

R-CO-NH2

wherein R is H, NH₂, CH₃, or CF₃.

Specific examples of useful amides include, but are not limited to, urea, 1-methyl urea, 1,1-dimethyl urea, 1,3-dimethylurea, thiourea, urea, benzamide, acetamide, and combinations thereof.

In one or more embodiments, useful carboxylic acids include mono-functional, di-functional, and tri-functional organic acids. These organic acids may include alkyl acids, aryl acids, and mixed alkyl-aryl acids.

Specific examples of useful mono-functional carboxylic acids include, but are not limited to, aliphatic acids, phenylpropionic acid, phenylacetic acid, benzoic acid, and combinations thereof. Specific examples of di-functional carboxylic acids include, but are not limited to, oxalic acid, malonic acid, adipic acid, succinic acid, and combinations thereof. Specific examples of tri-functional carboxylic acids include citric acid, tricarballylic acid, and combinations thereof.

Types of alcohols include, but are not limited to, monools, diols, and triols. Specific examples of monools include aliphatic alcohols, phenol, substituted phenol, and mixtures thereof. Specific examples of diols include ethylene glycol, propylene glycol, resorcinol, substituted resorcinol, and mixtures thereof. Specific examples of triols include, but are not limited to, glycerol, benzene triol, and mixtures thereof.

### METAL HALIDES

Types of metal halides include, but are not limited to, chlorides, bromides, iodides and fluorides. In one or more embodiments, these metal halides include, but are not limited to, transition metal halides. The skilled person can readily envisage the corresponding metal halide hydrates.

Specific examples of useful metal halides include, but are not limited to, aluminum chloride, aluminum bromide, aluminum iodide, zinc chloride, zinc bromide, zinc iodide, tin chloride, tin bromide, tin iodide, iron chloride, iron bromide, iron iodide, and combinations thereof. The skilled person can readily envisage the corresponding metal halide hydrates. For example, aluminum chloride hexahydrate and copper chloride dihydrate correspond to the halides mentioned above.

### FORMATION OF EUTECTIC COMPLEX

The skilled person can select the appropriate eutectic members at the appropriate molar ratio to provide the desired eutectic composition. The skilled person appreciates that the molar ratio of the first compound (e.g. Lewis base) of the pair to the second compound (e.g. Lewis acid) of the pair will vary based upon the compounds selected. As the skilled person will also appreciate, the melting point suppression of a eutectic solvent includes the eutectic point, which is the molar ratio of the first compound to the second compound that yields the maximum melting point suppression (i.e. deep eutectic solvent). The molar ratio of the first compound to the second compound can, however, be varied to nonetheless produce a suppression in the melting point of a eutectic solvent relative to the individual melting points of the first and second compounds that is not the minimum melting point (i.e. not the point of maximum suppression). Practice of one or more embodiments of the present invention therefore includes the formation a eutectic solvent at molar ratios outside of the eutectic point.

In one or more embodiments, the compounds of the eutectic pair, as well as the molar ratio of the first compound to the second compound of the pair, are selected to yield a mixture having a melting point below 130 °C, in other embodiments below 110 °C, in other embodiments below 100 °C, in other embodiments below 80 °C, in other embodiments below 60 °C, in other embodiments below 40 °C, and in other embodiments below 30 °C. In these or other embodiments, the compounds of the eutectic pair, as well as the molar ratio of the compounds, are selected to yield a mixture having a melting point above 0 °C, in other embodiments above 10 °C, in other embodiments above 20 °C, in other embodiments above 30 °C, and in other embodiments above 40 °C.

In one or more embodiments, the compounds of the eutectic pair, as well as the molar ratio of the first compound to the second compound of the pair, are selected to yield a eutectic solvent having an ability or capacity to dissolve desired metal compounds, which may be referred to as solubility or solubility power. As the skilled person will appreciate, this solubility can be quantified based upon the weight of metal compound dissolved in a given weight of eutectic solvent over a specified time at a specified temperature and pressure when saturated solutions are prepared. In one or more embodiments, the eutectic solvents of the present invention are selected to achieve a solubility for zinc oxide, over 24 hours at 50 °C under atmospheric pressure, of greater than 100 ppm, in other embodiments greater than 500 ppm, in other embodiments greater than 1000 ppm, in other embodiments greater than 1200 ppm, in other embodiments greater than 1400 ppm, and in other embodiments greater than 1600 ppm, where ppm is measured on a weight solute to weight solvent basis.

In one or more embodiments, a eutectic solvent is formed by combining the first compound with the second compound at an appropriate molar ratio to provide a solvent composition (i.e. liquid composition at the desired temperature). The mixture may be mechanically agitated by using various techniques including, but not limited to, solid state mixing or blending techniques. Generally speaking, the mixture is mixed or otherwise agitated until a liquid that is visibly homogeneous is formed. Also, the mixture may be formed at elevated temperatures. For example, the eutectic solvent may be formed by heating the mixture to a temperature of greater than 50 °C, in other embodiments greater than 70 °C, and in other embodiments greater than 90 °C. Mixing may continue during the heating of the mixture. Once a desired mixture is formed, the eutectic solvent can be cooled to room temperature. In one or more embodiments, the cooling of the eutectic solvent may take place at a controlled rate such as at a rate of less than 1 °C/min.

In one or more embodiments, useful eutectic compositions can be obtained commercially. For example, deep eutectic solvents are commercially available under the tradenames Ionic Liquids from Scionix. Useful eutectic compositions are also generally known as described in U.S. Publ. Nos. 2004/0097755 A1 and 2011/0207633 A1.

### RUBBER COMPOSITION

As suggested above, the vulcanizable compositions of this invention include a vulcanizable rubber, which may also be referred to as a vulcanizable elastomer or simply an elastomer. In one or more embodiments, the elastomer includes those polymers that are capable of being cured (also referred to as vulcanized) to form elastomeric compositions of matter. Elastomers that are useful in vulcanizable compositions for air spring bellows are further described in U.S. Publication No. 2010/0117274 and International Publication No. WO 2011/0884488.

As those skilled in the art appreciate, exemplary elastomers include natural rubber, synthetic polyisoprene, polybutadiene, polyisobutylene-*co*-isoprene, polychloroprene, poly(ethylene-*co*-propylene), poly(styrene-*co*-butadiene), poly(styrene-*co*-isoprene), poly(styrene-*co*-isoprene-*co*-butadiene), poly(isoprene-*co*-butadiene), poly(ethylene-*co*-propylene-*co*-diene), polysulfide rubber, acrylic rubber, urethane rubber, nitrile rubber, hydrogenated nitrile rubber, silicone rubber, epichlorohydrin rubber, chlorinated polyethylene and mixtures thereof.

In particular embodiments, the vulcanizable composition includes elastomers that derive from the polymerization of halogenated dienes and optionally monomer copolymerizable therewith. An exemplary halogenated diene is 2-chloro-1,3-butadiene, which is also known as chloroprene. Examples of monomer copolymerizable with chloroprene includes sulfur and 2,3-dichloro-1,3-butadiene. Homopolymers of chloroprene are generally referred to as polychloroprene. For purposes of this description, the rubbers deriving from the copolymerization of chloroprene and monomer copolymerizable therewith may be referred to as polychloroprene copolymers.

In one or more embodiments, polychloroprene or polychloroprene copolymers employed in the practice of this invention may be characterized by a Mooney viscosity (ML₁₊₄ at 100°C) of greater than 25, in other embodiments greater than 40, in other embodiments greater than 60, in other embodiments greater than 80, and in other embodiments greater than 100. In these or other embodiments, the polychloroprene or polychloroprene copolymers may be characterized by a Mooney viscosity (ML₁₊₄ at 100 °C) of less than 150, in other embodiments less than 130, in other embodiments less than 110 in other embodiments less than 80, in other embodiments less than 60, and in other embodiments less than 50. In particular embodiments, the polychloroprene or polychloroprene copolymers may be characterized by a Mooney viscosity (ML₁₊₄ at 100 °C) of from about 100 to about 120, and in other embodiments from about 41 to about 51.

### CURE SYSTEM

As suggested above, the vulcanizable compositions of this invention include a cure system. The cure system includes a curative, which may also be referred to as rubber curing agent or vulcanizing agent. Curing agents are described in Kirk-Othmer, ENCYCLOPEDIA OF CHEMICAL TECHNOLOGY, Vol. 20, pgs. 365-468, (3rd Ed. 1982), particularly Vulcanization Agents and Auxiliary Materials, pgs. 390-402, and A.Y. Coran, Vulcanization, ENCYCLOPEDIA OF POLYMER SCIENCE AND ENGINEERING, (2nd Ed. 1989). Useful cure systems include sulfur or a sulfur-based curatives. In one or more embodiments, the curative is sulfur. Examples of suitable sulfur vulcanizing agents include "rubbermaker's" soluble sulfur; sulfur donating vulcanizing agents, such as an amine disulfide, polymeric polysulfide or sulfur olefin adducts; and insoluble polymeric sulfur. Vulcanizing agents may be used alone or in combination. The skilled person will be able to readily select the amount of vulcanizing agents to achieve the level of desired cure. Sulfurs that are soluble or insoluble in elastomers may be used. Exemplary sulfur is Crystex OT 20, polymeric sulfur that is insoluble in elastomers. At vulcanization temperatures, Crystex OT 20 de-polymerizes to soluble sulfur and behaves similarly to what is traditionally known as "rubber maker's sulfur" and fosters the crosslinking of polymer molecules.

In one or more embodiments, the sulfur cure systems may be employed in combination with vulcanizing accelerators. Useful accelerators include thioureas such as ethylene thiourea, N,N-dibutylthiourea, N,N-diethylthiourea and the like; thiuram monosulfides and disulfides such as tetramethylthiuram monosulfide (TMTMS), tetrabutylthiuram disulfide (TBTDS), tetramethylthiuram disulfide (TMTDS), tetraethylthiuram monosulfide (TETMS), dipentamethylenethiuram hexasulfide (DPTH) and the like; benzothiazole sulfenamides such as N-oxydiethylene-2-benzothiazole sulfenamide, N-cyclohexyl-2-benzothiazole sulfenamide, N,N-diisopropyl-2-benzothiazolesulfenamide, N-tert-butyl-2-benzothiazole sulfenamide (TBBS) (available as Delac^{®} NS from Chemtura, Middlebury, CT) and the like; other thiazole accelerators such as 2-mercaptobenzothiazole (MBT), benzothiazyl disulfide (MBTS), N,N-diphenylguanidine, N,N-di-(2-methylphenyl)-guanidine, 2-(morpholinodithio)benzothiazole disulfide, zinc 2-mercaptobenzothiazole and the like; dithiocarbamates such as tellurium diethyldithiocarbamate, copper dimethyldithiocarbamate, bismuth dimethyldithiocarbamate, cadmium diethyldithiocarbamate, lead dimethyldithiocarbamate, sodium butyldithiocarbamate, zinc diethyldithiocarbamate, zinc dimethyldithiocarbamate, zinc dibutyldithiocarbamate (ZDBDC) and mixtures thereof. Sulfur donor-type accelerators (e.g. di-morpholino disulfide and alkyl phenol disulfide) may be used in place of elemental sulfur or in conjunction with elemental sulfur if desired. The amount of accelerator can also be readily determined by those skilled in the art. Although one having skill in the art may appreciate other possible cure packages, an exemplary cure package includes sulfur, TMTD, zinc oxide, Vulkanox MB2 (AO2), and IPPD.

### METAL COMPOUND /ACTIVATOR AND ORGANIC ACID

As suggested above, the vulcanizable composition of one or more embodiments of the present invention includes a metal compound. In one or more embodiments, the metal compound is an activator (i.e. assists in the vulcanization or cure of the rubber). In other embodiments, the metal activator is a metal oxide. In particular embodiments, the metal activator is a zinc species that is formed *in situ* through a reaction or interaction between zinc oxide and organic acid (e.g. stearic acid). In other embodiments, the metal compound is a magnesium compound such as magnesium hydroxide. In other embodiments, the metal compound is an iron compound such as an iron oxide. In other embodiments, the metal compound is a cobalt compound such as a cobalt carboxylate. In one or more embodiments, the vulcanizable composition of this invention may include magnesium oxide (MgO).

In one or more embodiments, the zinc oxide is an unfunctionalized zinc oxide characterized by a BET surface area of less than 10 m²/g, in other embodiments less than 9 m²/g, and in other embodiments less than 8 m²/g. In other embodiments, nano zinc oxide is employed, which includes those zinc oxide particles that are characterized by a BET surface area of greater than 10 m²/g.

In one or more embodiments, the organic acid is a carboxylic acid. In particular embodiments, the carboxylic acid is a fatty acid including saturated and unsaturated fatty acids. In particular embodiments, saturated fatty acids, such as stearic acid, are employed. Other useful acids include, but are not limited to, palmitic acid, arachidic acid, oleic acid, linoleic acid, and arachidonic acid.

### FILLER

In one or more embodiments, the vulcanizable composition includes one or more fillers. In one or more embodiments, the vulcanizable composition of this invention may include one or more reinforcing fillers and/or one or more non-reinforcing fillers. Examples of fillers include renewable materials useful as filler, silicon, carbon black, coal filler, ground recycled rubber, clay, magnesium hydroxide, titanium dioxide, iron oxide, aluminum trihydrate, mica, calcium carbonate, and talc.

In one or more embodiments, the vulcanizable composition of this invention may include carbon black. Carbon black is virtually pure elemental carbon in the form of colloidal particles that are produced by incomplete combustion or thermal decomposition of gaseous or liquid hydrocarbons under controlled conditions. Carbon black may be added to the vulcanizable composition as a reinforcing filler to achieve the required balance of processability, hardness and tensile or tear properties. Generally, any conventional carbon black, or blends of the same, used in compounding rubber-based airsleeve formulations is suitable for use in the present invention.

In one or more embodiments, the vulcanizable composition of this invention may include silica. Useful forms of silica (silicon dioxide) include crystalline and amorphous silica. The crystalline form of silica includes quartz, tridymite and cristobalite. Amorphous silica may occur when the silicon and oxygen atoms are arranged in an irregular form as identified by X-ray diffraction. In one or more embodiments, the silica is a precipitated silica. In these or other embodiments, fumed silica is employed. Commercially available forms of silica are available from PPG Industries, Inc. (Monroeville, PA), Degussa Corporation (Parsippany, NJ) and J.M. Huber Corporation (Atlanta, GA). One useful commercial product is Rubbersil^{®} RS-150, which is characterized by a BET surface area of 150 m²/g, tapped density of 230 g/liter, pH (5% in water suspension) of 7, SiO₂ content of 98%, Na₂SO₄ content of 2%, and Al₂O₃ content of 0.2%.

In one or more embodiments, the rubber composition may include clay as a filler. In other embodiments, the present invention is devoid of clay. Useful clays include hydrated aluminum silicates. In one or more embodiments, useful clays can be represented by the formula Al₂O₃SiO₂•XH₂O. Exemplary forms of clay include kaolinite, montmorillonite, atapulgite, illite, bentonite, halloysite, and mixtures thereof. In one embodiment, the clay is represented by the formula Al₂O₃SiO₂•3H₂O. In another embodiment, the clay is represented by the formula Al₂O₃SiO₂•2H₂O. In a preferred embodiment, the clay has a pH of about 7.0.

In one or more embodiments, various forms or grades of clays may be employed. Exemplary forms or grades of clay include air-floated clays, water-washed clays, calcined clays, and chemically modified (surface treated) clays. In other embodiments, untreated clays may be used.

Air-floated clays include hard and soft clays. In one or more embodiments, hard clays include those characterized as having a lower median particle size distribution, and higher surface area than soft clays. In one or more embodiments, soft clays include those characterized by having a higher median particle size distribution and lower surface area than hard clays. Hard and soft clays are disclosed in U.S. Patent Nos. 5,468,550, and 5,854,327.

In one embodiment, the air-floated clays used have a pH of from about 4.0 to about 8.0, and in another embodiment, the pH is about neutral. Useful airfloated clays have an average particle size of less than about 2 microns. Typical airfloated clays have a specific gravity of around 2.6 g/cc. Airfloated clays, both hard and soft, are available through various sources.

Water washed clays include those clays that are more closely controlled for particle size by the water fractionation process. This process permits the production of clays within controlled particle size ranges. In one or more embodiments, the average particle size of the clay is less than about 2 microns in diameter. In one embodiment, the water washed kaolin clay includes hydrated aluminum silicate, and may be characterized by a pH of from about 6 to about 7.5, and a specific gravity of about 2.6 g/cc.

Calcined clays include those that result from the removal of water contained in clays (clays typically contain about 14 percent water) by calcination.

Chemically modified (surface treated) clays include those that have crosslinking ability, which can be imparted to the clay by modifying the surface of individual particles with a polyfunctional silane coupling agent. In one or more embodiments, the coupling agents include a silane group or moiety that is believed to react with a hydroxyl group on the filler and chemically bond thereto. Inasmuch as silica includes hydroxyl groups that will react with silane groups on the coupling agent, the coupling agents may be referred to as silica coupling. In other embodiments, the coupling agents may be referred to as silane coupling agents. Useful silica coupling agents are disclosed in U.S. Pat. Nos. 3,842,111, 3,873,489, 3,978,103, 3,997,581, 4,002,594, 5,580,919, 5,583,245, 5,663,396, 5,674,932, 5,684,171, 5,684,172, 5,696,197, 6,608,145, and 6,667,362.

It will be understood that carbon black often acts as a black pigment, and rubber compositions containing a threshold amount of carbon black will be black. In the absence of significant amounts of black filler, the air spring sleeves of the present invention may advantageously be lighter in color. The lighter color of the rubber compositions lends colorability to the air spring sleeves. For example, in embodiments where titanium dioxide is employed as a filler, the air spring sleeve may be generally white, due to the ability of the titanium dioxide to function as a white pigment. In embodiments where iron oxide is employed as a filler, the air spring sleeve may be generally red, due to the ability of the iron oxide to function as a red pigment. In one or more embodiments, the rubber composition includes a renewable material that is useful as a filler. In one or more embodiments, the renewable filler may be an agricultural product. Suitable agricultural products include corn-based fillers. Examples of corn-based fillers include ground corn, ground corn cobs, and other corn byproducts. Corn-based fillers that are made from corncobs are commercially available from Best Cob LLC (Rock Falls, IL).

In one or more embodiments, the average particle size of the renewable filler is greater than 0.1 microns, in other embodiments, greater than 0.5 microns, in other embodiments, greater than 0.7 microns, and in other embodiments, greater than 1 micron. In one or more embodiments, the average particle size of the renewable filler is greater than 5 microns, in other embodiments, greater than 10 microns, and in other embodiments, greater than 15 microns. In one or more embodiments, the average particle size of the renewable filler is greater than 50 microns, and in other embodiments, greater than 200 microns. In one or more embodiments, the average particle size of the renewable filler is less than 500 microns, in other embodiments 200 microns or less, and in other embodiments less than 70 microns. In one or more embodiments, the average particle size of the renewable filler is less than 50 microns, in other embodiments 15 microns or less, and in other embodiments less than 10 microns. In one or more embodiments, the average particle size of the renewable filler is less than 5 microns, in other embodiments less than 1 micron, and in other embodiments less than 0.7 microns.

### OTHER

In one or more embodiments, the vulcanizable composition of this invention includes an additional colorant, such as a dye or pigment. The colorant may enhance the white color of compositions that do not contain black filler, or may provide a color other than black or white to the vulcanizable composition.

In one or more embodiments, at least one layer of the air spring sleeve is a non-black color. In one or more embodiments, the air spring sleeve is a non-black color. In one or more embodiments, the non-black color may be red, blue, green, white, purple, orange, yellow, or any color that can be created through the use of dyes or pigments. In other embodiments, the air spring sleeve may be black. In one or more embodiments, each layer of the air spring sleeve is the same color as the other layers. In particular embodiments, the layers of the air spring sleeve are different colors. In certain embodiments, the outer layer of the air spring sleeve is a non-black color.

In one or more embodiments, the vulcanizable composition of this invention may include an antioxidant. Useful antioxidants include bisphenol type antioxidants, diphenylamines, and zinc salts.

Antidegradants protect the final product vulcanizate against damaging external influences such as oxidation, ozone, heat, and dynamic stresses. Suitable antidegradants include 4- and 5-methyl-2-mercaptobenzimidazole (MMBI), mixed diaryl-p-phenylene type antidegradants, IPPD, or N-isopropyl-N'-phenyl-p-phenylenediamine, and 6PPD, or N-(1,3-dimethylbutyl)-N-phenyl-p-phenylenediamine.

In one or more embodiments, the vulcanizable composition of this invention may include low oil swell factices, or vulcanized oils. In specific embodiments, these compounds include sulfur vulcanized vegetable oils. These factices decrease compound nerve and may permit higher liquid plasticizer levels. Factices may also speed the incorporation of fillers and increase milling efficiency. A suitable factice is commercially available from Akrochem Corporation (Akron, OH) under the Akrofax tradename.

In one or more embodiments, plasticizers, which may also be referred to as softeners, include, but are not limited to, fatty acids, vegetable oils, petroleum products, coal tar products, pine products, esters, and resins. In particular embodiments, the plasticizers include esters such as dicapryilphthalate, butylcuminate, dibutylphthalate, butyllactate, glycerol chlorobenzoate, methylricinoleate, octyloleate, dioctylphthalate, or dioctylsebacate

In one or more embodiments, the vulcanizable compositions of this invention may include a tackifier or tackifier resin. As is known in the art, these resins generally increase the tackiness of the composition. Natural or synthetic resins may be employed. In particular embodiments, a nitrile rubber latex is employed as a tackifier. In these or other embodiments, the tackifier may include Koresin (BASF), which is believed to be a resin of acetylene and p-t-butylphenol. Certain embodiments, selection of the tackifier and the amount of tackifier employed advantageously compensates for the lack of tackiness associate with the HNBR, which lack of tackiness would frustrate the processing of the vulcanizable composition and/or the manufacturing of the bellow.

In one or more embodiments, the vulcanizable composition of this invention may include wax. Wax is a processing aid and serves as a release agent.

In one or more embodiments, the vulcanizable composition of this invention may include a low viscosity polyethylene wax. Low viscosity polyethylene wax is a release, or antisticking, agent. A useful low viscosity polyethylene wax is available from Akrochem Corporation (Akron, OH) under the PE-100 tradename.

### INGREDIENT AMOUNTS

### RUBBER

In one or more embodiments, the vulcanizable compositions employed in practicing the present invention include a sufficient amount of vulcanizable rubber so as to achieve a technologically useful airsleeve of an air spring. In one or more embodiments, the overall vulcanizable composition of matter includes greater than 35% by weight, in other embodiments greater than 40% by weight, and in other embodiments greater than 45% by weight vulcanizable rubber. In these or other embodiments, the overall vulcanizable composition of matter includes less than 99%, in other embodiments less than 90%, and in other embodiments less than 75% by weight vulcanizable rubber.

In one or more embodiments, greater than 80%, in other embodiments greater than 90%, and in other embodiments greater than 95% of the rubber component of the vulcanizable composition comprises polychloroprene or polychloroprene copolymers.

### EUTECTIC COMPOSITION

According to the invention, the vulcanizable composition includes greater than 0.005 pbw of the eutectic composition per 100 pbw rubber. In other embodiments greater than 0.01, and in other embodiments greater than 0.02 parts by weight (pbw) of the eutectic composition per 100 parts by weight rubber (phr). According to the invention, the vulcanizable composition includes less than 3 pbw of the eutectic composition per 100 pbw rubber. In other embodiments less than 1, and in other embodiments less than 0.1 pbw of the eutectic composition phr. According to the invention, the vulcanizable compositions include from about 0.005 to about 3 pbw of the eutectic composition per 100 pbw rubber. In other embodiments from about 0.01 to about 1, and in other embodiments from about 0.02 to about 0.1 pbw of the eutectic composition phr.

In one or more embodiments, the amount of eutectic solvent can be described with reference to the loading of metal activator (such as zinc oxide). In one or more embodiments, the vulcanizable compositions include greater than 2, in other embodiments greater than 3, and in other embodiments greater than 5 wt % eutectic solvent based upon the total weight of the eutectic solvent and the metal activator (e.g. zinc oxide) present within the vulcanizable composition. In these or other embodiments, the vulcanizable compositions include less than 15, in other embodiments less than 12, and in other embodiments less than 10 wt% eutectic solvent based upon the total weight of the eutectic solvent and the metal activator (e.g. zinc oxide) present within the vulcanizable composition. In one or more embodiments, the vulcanizable compositions include from about 2 to about 15, in other embodiments from about 3 to about 12, and in other embodiments from about 5 to about 10 wt % eutectic solvent based upon the total weight of the eutectic solvent and the metal activator (e.g. zinc oxide) present within the vulcanizable composition.

### METAL COMPOUND

According to the invention, the vulcanizable composition includes less than 2 pbw of the zinc oxide per 100 pbw rubber. In one or more embodiments, the vulcanizable compositions include greater than 0.05, in other embodiments greater than 0.1, and in other embodiments greater than 0.15 parts by weight (pbw) of metal activator (zinc oxide) per 100 parts by weight rubber (phr). In these or other embodiments, the vulcanizable composition includes less than 2, in other embodiments less than 1, and in other embodiments less than 0.75 pbw of metal activator (zinc oxide) phr. In one or more embodiments, the vulcanizable composition includes from about 0.05 to about 2, in other embodiments from about 0.1 to about 1, and in other embodiments from about 0.15 to about 0.75 pbw of metal activator (zinc oxide) phr.

### ORGANIC ACID

In one or more embodiments, the vulcanizable compositions include greater than 0.5, in other embodiments greater than 0.7, and in other embodiments greater than 1.0 parts by weight (pbw) of organic acid (e.g. stearic acid) per 100 parts by weight rubber (phr). In these or other embodiments, the vulcanizable composition includes less than 5, in other embodiments less than 3, and in other embodiments less than 2 pbw of organic acid (e.g. stearic acid) phr. In one or more embodiments, the vulcanizable composition includes from about 0.5 to about 5, in other embodiments from about 0.7 to about 3, and in other embodiments from about 1.0 to about 2 pbw of organic acid (e.g. stearic acid) phr.

### FILLER

In one or more embodiments, the vulcanizable composition includes less than 75 parts by weight (pbw) filler per 100 parts by weight rubber (phr), in other embodiments, less than 50 pbw, in other embodiments, less than 40 pbw, in other embodiments, less than 30 pbw, and in other embodiments, less than 15 pbw filler phr. In one or more embodiments, the vulcanizable composition includes more than 1 pbw, in other embodiments, more than 5 pbw, and in other embodiments, more than 10 pbw, in other embodiments, more than 20 pbw, in other embodiments, more than 30 pbw, and in other embodiments more than 40 pbw filler phr.

### OTHER

In certain embodiments, the vulcanizable composition is devoid of plasticizer. In one or more embodiments, the vulcanizable compositions may include greater than 7 pbw, in other embodiments greater than 10 pbw, and in other embodiments greater than 12 pbw plasticizer, based on 100 parts by weight rubber (phr). In these or other embodiments, the vulcanizable compositions may include less than 100 pbw, in other embodiments less than 90 pbw, and in other embodiments less than 80 pbw plasticizer phr. In these or other embodiments, the vulcanizable compositions may include from about 0 to about 100 weight %, in other embodiments from about 10 to about 90 pbw, and in other embodiments from about 12 to about 80 pbw plasticizer, based on 100 parts by weight rubber (phr).

In certain embodiments, the vulcanizable composition is devoid of tackifiers. In certain embodiments, the vulcanizable composition may include greater than 1 part by weight, in other embodiments greater than 2 parts by weight, in other embodiments greater than 4 parts by weight tackifier phr. In these or other embodiments, the vulcanizable composition may include less than 10 pbw, in other embodiments less than 8 pbw, in other embodiments less than 5 pbw tackifier phr. In these or other embodiments, the vulcanizable compositions may include from about 0 to about 10 weight %, in other embodiments from about 1 to about 8 tackifier phr.

Those skilled in the art will be able to select an appropriate amount of the various ingredients that can be used based upon the ultimate desired properties sought within the airsleeve of an air spring. Likewise, those skilled in the art will be able to select an appropriate amount of curative and extending cure agents in order to achieve a desired level of cure.

### METHODS OF MANUFACTURE

The compositions for preparing one or more layers of airsleeve according to the present invention can be prepared by conventional means using conventional rubber compounding equipment such as Brabender, Banbury, Werner-Pfleiderer, Sigma-blade mixer, two-roll mill, or other mixers suitable for forming viscous, relatively uniform admixtures. Mixing techniques depend on a variety of factors such as the specific types of polymers used, and the fillers, processing oils, waxes, and other ingredients used. In one or more embodiments, the ingredients can be added together in a single stage. In other embodiments, some of the ingredients, such as the eutectic composition, fillers, oils, etc., can be loaded first followed by the polymer. In other embodiments, the polymer is added first followed by the other ingredients. Mixing cycles generally range from about 2 to 10 minutes. In certain embodiments an incremental procedure can be used whereby the rubber and part of the ingredients are added first, and the remaining ingredients are added in additional increments. In other embodiments, part of the rubber can be added on top of the other ingredients. In one or more embodiments, two-stage mixing can be employed.

In one or more embodiments, the eutectic composition is prepared prior to introducing the eutectic composition to the vulcanizable rubber. In other words, the first constituent of the eutectic mixture is pre-combined with the second constituent of the eutectic mixture prior to introducing the eutectic mixture to the vulcanizable composition. In one or more embodiments, the combined constituents of the eutectic mixture are mixed until a homogeneous liquid composition is observed.

In one or more embodiments, the eutectic mixture is pre-combined with one or more ingredients of the rubber formulation prior to introducing the eutectic mixture to the vulcanizable composition. In other words, in one or more embodiments, a constituent of the vulcanizable composition (e.g. a metal compound such as zinc oxide) is combined with the eutectic mixture to form a pre-combination or masterbatch prior to introducing the pre-combination to the mixer in which the rubber is mixed. For example, zinc oxide may be dissolved in the eutectic solvent prior to introduction to the rubber within the mixer. In other embodiments, the eutectic composition is the minor component of the pre-combination, and therefore the constituent that is pre-mixed with the eutectic composition acts as a carrier for the eutectic composition. For example, the eutectic composition can be combined with a larger volume of zinc oxide, and the zinc oxide will act as a carrier for delivery the combination of zinc oxide and eutectic composition as a solid to the rubber within the mixer. In yet other embodiments, one of the members of the eutectic pair acts as a solid carrier for the eutectic composition, and therefore the combination of the first and second ingredients of the eutectic composition form a pre-combination that can be added as a solid to the rubber within the mixer. The skilled person will appreciate that mixtures of this nature can be formed by combining an excess of the first or second eutectic members as excess, relative to the other eutectic member, to maintain a solid composition at the desired temperature.

When utilizing an internal mixer, the dry or powdery materials such as the carbon black can be added first, followed by the processing aids and finally the rubber to form the masterbatch. The cure package (sulfur, accelerants, antidegradants, etc.) can be added near the end of the mixing cycle and at lower temperatures to prevent premature crosslinking of the rubber. In other embodiments, the cure package can be added to the masterbatch in order to improve dispersion.

In one or more embodiments, mixing takes place under sufficient heat and mixing energy to achieve an internal composition temperature of greater than 120 °C, in other embodiments greater than 130 °C, in other embodiments greater than 140 °C, and in other embodiments greater than 150 °C. In these or other embodiments, mixing takes place under sufficient heat and mixing energy to achieve an internal composition temperature of less than 180 °C, in other embodiments less than 175 °C, in other embodiments less than 170 °C, in other embodiments less than 165 °C, in other embodiments less than 160 °C, and in other embodiments less than 155 °C.

Following this initial mixing, the masterbatch can be cooled to temperatures below 160 °C, in other embodiments below 140 °C, and in other embodiments below 130 °C, which may take place by dropping the masterbatch from the mixer. Once cooled, the composition can be again charged to a mixing apparatus and additional components may or may not be added, as described elsewhere herein. This subsequent mixing may take place at temperatures below 160 °C, in other embodiments below 155 °C, in other embodiments below 150 °C, and in other embodiments below 145 °C. In one or more embodiments, subsequent mixing may take place at temperatures of from about 120 °C to about 155 °C, or in other embodiments from about 130 °C to about 150 °C.

After this mixing, preparation of the vulcanizable composition can then be completed by the addition and subsequent mixing with the cure system. Prior to adding the cure system to the vulcanizable composition, the vulcanizable composition can be cooled to temperatures below 130 °C, in other embodiments below 115 °C, in other embodiments below 100 °C, and in other embodiments below 80 °C. As above, cooling may take place by dropping the mixture from the mixer.

The mixing in the presence of the cure system may occur at temperatures below 150 °C, in other embodiments below 130 °C, in other embodiments below 110 °C, and in other embodiments below 100 °C. In certain embodiments, mixing in the presence of the cure system may occur at a temperature of from about 70 °C to about 110 °C, or in other embodiments from about 95 °C to about 105 °C. The resultant product from this mixing step may be referred to as the final vulcanizable composition.

In one or more embodiments, and as discussed above, the eutectic solvent is introduced to the vulcanizable rubber as an initial ingredient in the formation of a rubber masterbatch. As a result, the eutectic solvent undergoes high shear, high temperature mixing with the rubber. In one or more embodiments, the eutectic solvent undergoes mixing with the rubber at minimum temperatures in excess of 110 °C, in other embodiments in excess of 130 °C, and in other embodiments in excess of 150 °C. In one or more embodiments, high shear, high temperature mixing takes place at a temperature from about 110 °C to about 170 °C. In one or more embodiments, the eutectic solvent undergoes mixing with the rubber at a temperature of from about 140 °C to about 180 °C, or in other embodiments from about 150 °C to about 170 °C.

In other embodiments, and as discussed above, the eutectic solvent is introduced to the vulcanizable rubber, either sequentially or simultaneously, with the sulfur-based curative. As a result, the eutectic solvent may undergo mixing with the vulcanizable rubber at a maximum temperature below 110 °C, in other embodiments below 105 °C, and in other embodiments below 100 °C. In one or more embodiments, mixing with the curative takes place at a temperature from about 70 °C to about 110 °C.

As with the eutectic solvent, the zinc oxide and the stearic acid can be added as initial ingredients to the rubber masterbatch, and therefore these ingredients will undergo high temperature, high shear mixing. Alternatively, the zinc oxide and the stearic acid can be added along with the sulfur-based curative and thereby only undergo low-temperature mixing.

In one or more embodiments, the zinc oxide is introduced to the vulcanizable rubber separately and individually from the eutectic solvent. In other embodiments, the zinc oxide and the eutectic solvent are pre-combined to form a zinc oxide masterbatch, which may include a solution in which the zinc oxide is dissolved or otherwise dispersed in the eutectic solvent. The zinc oxide masterbatch can then be introduced to the vulcanizable rubber.

In one or more embodiments, the vulcanizable elastomer is provided or introduced to the other ingredients in the form of a latex (or at least a portion of the elastomer is added as a latex). It is believed that by introducing the elastomer as a latex, the tack of the vulcanizable composition can be increased thereby facilitating processing of the composition. For example, in one or more embodiments, a natural rubber latex, a nitrile rubber latex, and/or a polychloroprene latex may be introduced with the other ingredients and mixed by conventional techniques including the use of an internal mixer.

Once mixed, the rubber composition can be then formed into a sheet via calendaring or combined with a reinforcing cord (fabric or metal). The compositions of the invention can also be formed into various types of articles using other techniques such as extrusion.

The vulcanizable rubber compositions of the present invention can be formed into airsleeves of air springs by employing conventional techniques for fabricating and manufacturing air springs. This may include forming a green member prior to vulcanization. Air spring and air sleeve constructions and methods of their manufacture are known in the art as exemplified in U.S. Patent Nos. 7,250,203, 5,527,170, and 6,439,550.

In one or more embodiments, vulcanization may take place at temperatures of greater than 150 °C, in other embodiments greater than 155 °C, in other embodiments greater than 160 °C, in other embodiments greater than 165 °C, in other embodiments greater than 175 °C, and in other embodiments greater than 190 °C. In these or other embodiments, vulcanization may take place at temperatures of from about 125 °C to about 220 °C, in other embodiments from about 130 °C to about 200 °C, in other embodiments from about 140 °C to about 155 °C, or in other embodiments from about 145 °C to about 150 °C. In one or more embodiments, vulcanization may take place at increased pressures. For example, vulcanization may take place at pressures of greater than 1.5, in other embodiments greater than 2.0, in other embodiments greater than 2.5, in other embodiments greater than 3.0, and in other embodiments greater than 3.5 atmospheres.

### AIR SPRING CONSTRUCTION

As suggested above, the vulcanizable compositions are generally useful in the manufacture of one or more layers of an air spring bellow. In certain embodiments, the rubber composition is used in every layer of the bellow. The figures show various embodiments of air springs according to the present invention.

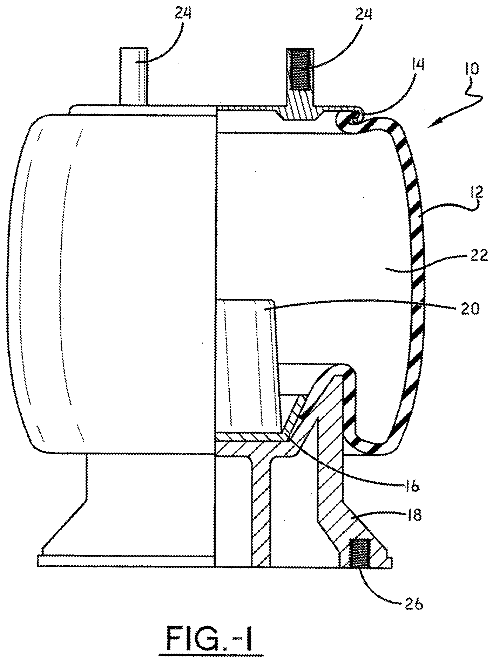

In Fig. 1, an air spring assembly is designated generally by the numeral 10. The air spring assembly 10 includes flexible air sleeve 12, which may also be referred as bellow 12. Bead plate 14 is crimped to air sleeve 12 to form an airtight seal between bead plate 14 and air sleeve 12. Similarly, end closure 16 is molded to flexible air sleeve 12 to form an airtight seal between end closure 16 and air sleeve 12. End closure 16 of air sleeve 12 is affixed to piston 18 by mechanical means well known in the art, including, for example, a piston bolt (not shown). Piston 18 provides a surface for flexible air sleeve 12 to roll on during compressive (jounce) travel. Flexible air spring assembly 10 may optionally include bumper 20 to support the vehicle when there is no air in the air springs or during extreme road disturbances. Enclosed within air sleeve 12 is a volume of gas 22. Studs 24 and hole 26 are used to secure the flexible air spring assembly 10 to the mounting surface of an automobile (not shown).

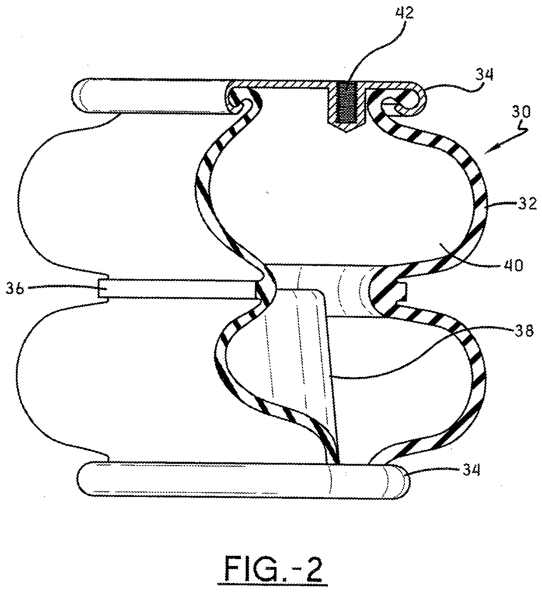

Fig. 2 shows an exemplary (double) convoluted air spring assembly designated generally by the numeral 30. Convoluted air spring assembly 30 includes flexible air sleeve 32. Bead plates 34 are crimped to air sleeve 32 to form an airtight seal between bead plates 34 and air sleeve 32. A girdle hoop 36 is affixed to air sleeve 32 between bead plates 34. Convoluted air spring assembly 30 may optionally include bumper 38 to support the vehicle when there is no air in the air springs or during extreme road disturbances. Enclosed within air sleeve 32 is a volume of gas 40. Blind nuts, including 42 and other blind nuts (not shown), are used to secure the convoluted air spring assembly 30 to the mounting surface of an automobile (not shown).

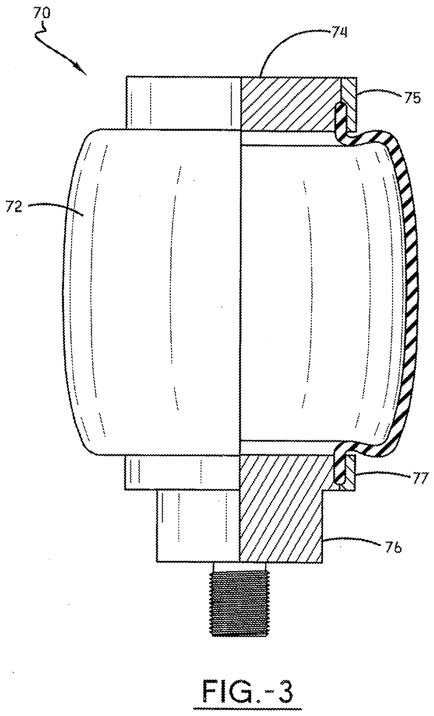

Fig. 3 shows an exemplary cab/seat spring assembly designated generally by the numeral 70. Cab/seat spring assembly 70 includes flexible air sleeve 72. Cab/seat plate 74 is attached to air sleeve 72 to form an air tight seal there between by using, for example, metal ring 75. An airtight seal can be made using known techniques such as those described in U.S. Patent No. 6,474,630, which is incorporated herein by reference. Suspension plate 76 is likewise secured to air sleeve 72 via metal ring 77 to form an airtight seal there between.

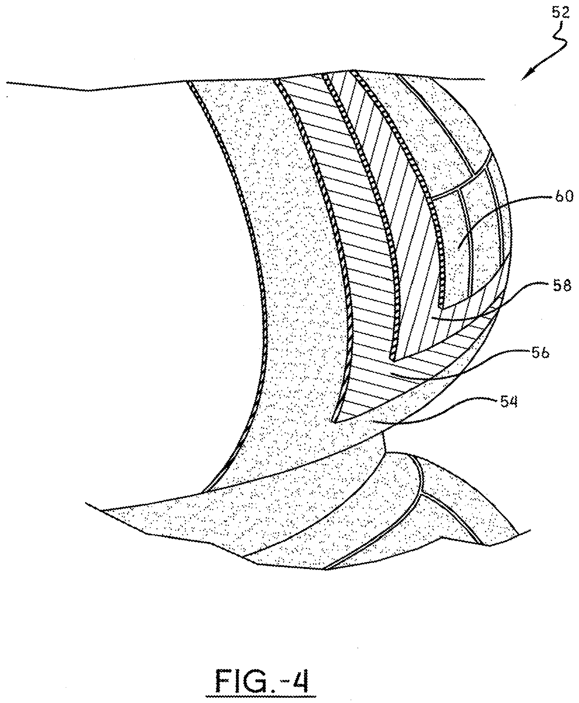

In one or more embodiments, air sleeves 12, 32, and 72 are made of cord-(fabric or metal) reinforced rubber and may be comprised of several layers, as shown in a cutaway view of an exemplary air sleeve 52 in Fig. 4. Exemplary air sleeve 52 features "two-ply" construction and includes four layers including: innerliner 54, first ply 56, second ply 58, and outer cover 60. Innerliner 54 and outer cover 60 may include calendared rubber. As shown, first ply 56 may include a single ply of cord-reinforced rubber with the cords at a specific bias angle, and second ply 58 may include a single ply of fabric-reinforced rubber with the same bias angle laid opposite that of first ply 56. Thus in one or more embodiments, each layer of the air sleeve may contain a rubber component. The rubber component of each layer may be the same or different.

While the present invention is described in the context of an air sleeve and an air spring used in the suspension of an automobile, one of skill in the art will appreciate that the teachings disclosed are general and the present invention may be applied to other art relating to the air spring areas. The other areas might include, for example, air springs for seats, air springs used to support truck cabs, air springs used with buses, and the like.

### AIR SPRING PERFORMANCE STANDARDS

According to aspects of the present invention, the cured air spring bellows, which may also be referred to as vulcanizates, are characterized by advantageous cure characteristics while including relatively low levels of metal activator such as zinc species.

In one or more embodiments, the vulcanizates are characterized by including less than 2 pbw, in other embodiments, less than 1 pbw, and in other embodiments, less than 0.7 pbw zinc per 100 parts by weight rubber (phr).

## Claims

1. A method of preparing a cured air spring bellow, the method comprising:
(i) preparing a vulcanizable composition including a eutectic composition by mixing a vulcanizable elastomer, a sulfur-based curative, zinc oxide, and the eutectic composition;
(ii) preparing a green member using the vulcanizable composition; and
(iii) curing the green member to form the cured air spring bellow;
where said vulcanizable composition includes less than 2 pbw of the zinc oxide per 100 pbw rubber;
where the vulcanizable composition includes from about 0.005 pbw to about 3 pbw of the eutectic composition per 100 pbw rubber; and
where the eutectic composition is selected from the group consisting of a combination of a quaternary ammonium salt with a metal halide, a combination of a quaternary ammonium salt and a metal halide hydrate, a combination of a quaternary ammonium salt and a hydrogen bond donor, a combination of a metal halide hydrate and a hydrogen bond donor, and analogous combinations of sulfonium or phosphonium in lieu of ammonium compounds.

2. The method of claim 1, where the eutectic composition is formed by combining choline chloride and urea.

3. The method of any of the preceding claims, where the eutectic composition is formed by combining an ammonium compound with a metal halide, a metal halide hydrate, or a hydrogen bond donor.

4. The method of claim 3, where the ammonium compound is defined by the formula II:
(R₁)(R₂)(R₃)(R₄) -N⁺- Φ⁻ (formula II)
where each R₁, R₂, R₃, and R₄ is individually hydrogen or a monovalent organic group, or, in the alternative, two of R₁, R₂, R₃, and R₄ join to form a divalent organic group, and Φ⁻ is a counter anion.

5. The method of claim 3, where the hydrogen bond donor is selected from the group consisting of amines, amides, carboxylic acids, and alcohols.

6. The method of claim 3, where the metal halide is selected from the group consisting of aluminum chloride, aluminum bromide, aluminum iodide, zinc chloride, zinc bromide, zinc iodide, tin chloride, tin bromide, tin iodide, iron chloride, iron bromide, iron iodide, and combinations thereof.

7. The method of any of the preceding claims, where the eutectic composition is provided with a carrier.

8. An air spring bellow formed by any of the methods of the preceding claims.

9. An air spring including the air spring bellow of claim 8.

## Patentansprüche

1. Verfahren zum Herstellen eines ausgehärteten Luftfederbalgs, das Verfahren umfassend:
(i) Herstellen einer vulkanisierbaren Zusammensetzung, die eine eutektische Zusammensetzung einschließt, durch ein Mischen eines vulkanisierbaren Elastomers, eines Härters auf Schwefelbasis, Zinkoxid und der eutektischen Zusammensetzung;
(ii) Herstellen eines Grünkörpers unter Verwendung der vulkanisierbaren Zusammensetzung; und
(iii) Aushärten des Grünkörpers, um den ausgehärteten Luftfederbalg auszubilden;
wobei die vulkanisierbare Zusammensetzung weniger als 2 Gewichtsteile Zinkoxid pro 100 Gewichtsteile Kautschuk einschließt;
wobei die vulkanisierbare Zusammensetzung von etwa 0,005 Gewichtsteile bis etwa 3 Gewichtsteile der eutektischen Zusammensetzung pro 100 Gewichtsteile Kautschuk einschließt; und
wobei die eutektische Zusammensetzung aus der Gruppe ausgewählt ist, bestehend aus einer Kombination eines quaternären Ammoniumsalzes mit einem Metallhalogenid, einer Kombination eines quaternären Ammoniumsalzes und eines Metallhalogenidhydrats, einer Kombination eines quaternären Ammoniumsalzes und eines Wasserstoffbrückendonors, einer Kombination eines Metallhalogenidhydrats und eines Wasserstoffbrückendonors und analogen Kombinationen von Sulfonium oder Phosphonium anstelle von Ammoniumverbindungen.

2. Verfahren nach Anspruch 1, wobei die eutektische Zusammensetzung durch das Kombinieren von Cholinchlorid und Harnstoff ausgebildet wird.

3. Verfahren nach einem der vorstehenden Ansprüche, wobei die eutektische Zusammensetzung durch das Kombinieren einer Ammoniumverbindung mit einem Metallhalogenid, einem Metallhalogenidhydrat oder einem Wasserstoffbrückendonor ausgebildet wird.

4. Verfahren nach Anspruch 3, wobei die Ammoniumverbindung definiert ist durch die Formel II:
(R₁)(R₂)(R₃)(R₄)-N+-Φ⁻ (Formel II)
wobei jedes R₁, R₂, R₃ und R₄ einzeln Wasserstoff oder eine einwertige organische Gruppe ist, oder alternativ sich zwei von R₁, R₂, R₃ und R₄ verbinden, um eine zweiwertige organische Gruppe auszubilden und Φ⁻ ein Gegenanion ist.

5. Verfahren nach Anspruch 3, wobei der Wasserstoffbrückendonor ausgewählt ist aus der Gruppe, bestehend aus Aminen, Amiden, Carbonsäuren und Alkoholen.

6. Verfahren nach Anspruch 3, wobei das Metallhalogenid ausgewählt ist aus der Gruppe, bestehend aus Aluminiumchlorid, Aluminiumbromid, Aluminiumiodid, Zinkchlorid, Zinkbromid, Zinkiodid, Zinnchlorid, Zinnbromid, Zinniodid, Eisenchlorid, Eisenbromid, Eiseniodid und Kombinationen davon.

7. Verfahren nach einem der vorstehenden Ansprüche, wobei die eutektische Zusammensetzung mit einer Trägersubstanz versehen ist.

8. Luftfederbalg, der nach einem der Verfahren der vorstehenden Ansprüche ausgebildet ist.

9. Luftfeder, die den Luftfederbalg nach Anspruch 8 einschließt.

## Revendications

1. Procédé de préparation d'un soufflet de ressort pneumatique vulcanisé, le procédé comprenant :
(i) la préparation d'une composition vulcanisable comportant une composition eutectique par mélange d'un élastomère vulcanisable, d'un agent de vulcanisation à base de soufre, d'oxyde de zinc, et de la composition eutectique ;
(ii) la préparation d'un élément cru à l'aide de la composition vulcanisable ; et
(iii) la vulcanisation de l'élément cru pour former le soufflet de ressort pneumatique vulcanisé ;
dans lequel ladite composition vulcanisable comporte moins de 2 pep d'oxyde de zinc par 100 pep de caoutchouc ;
dans lequel la composition vulcanisable comporte d'environ 0,005 pep à environ 3 pep de composition eutectique par 100 pep de caoutchouc ; et
dans lequel la composition eutectique est choisie dans le groupe constitué d'une combinaison d'un sel d'ammonium quaternaire avec un halogénure métallique, d'une combinaison d'un sel d'ammonium quaternaire et d'un hydrate d'halogénure métallique, d'une combinaison d'un sel d'ammonium quaternaire et d'un donneur de liaison hydrogène, d'une combinaison d'un hydrate d'halogénure métallique et d'un donneur de liaison hydrogène, et de combinaisons analogues de sulfonium ou de phosphonium à la place de composés d'ammonium.

2. Procédé selon la revendication 1, dans lequel la composition eutectique est formée par combinaison de chlorure de choline et d'urée.

3. Procédé selon l'une quelconque des revendications précédentes, dans lequel la composition eutectique est formée par combinaison d'un composé d'ammonium avec un halogénure métallique, un hydrate d'halogénure métallique ou un donneur de liaison hydrogène.

4. Procédé selon la revendication 3, dans lequel le composé d'ammonium est défini par la formule II :
(R₁)(R₂)(R₃)(R₄)-N+-Φ⁻ (formule II)
dans lequel chacun de R₁, R₂, R₃ et R₄ est individuellement de l'hydrogène ou un groupe organique monovalent, ou, alternativement, deux de R₁, R₂, R₃ et R₄ se lient pour former un groupe organique divalent, et Φ⁻ est un contre-anion.

5. Procédé selon la revendication 3, dans lequel le donneur de liaison hydrogène est choisi dans le groupe constitué d'amines, d'amides, d'acides carboxyliques, et d'alcools.

6. Procédé selon la revendication 3, dans lequel l'halogénure métallique est choisi dans le groupe constitué de chlorure d'aluminium, de bromure d'aluminium, d'iodure d'aluminium, de chlorure de zinc, de bromure de zinc, d'iodure de zinc, de chlorure d'étain, de bromure d'étain, d'iodure d'étain, de chlorure de fer, de bromure de fer, d'iodure de fer, et de combinaisons de ceux-ci.

7. Procédé selon l'une quelconque des revendications précédentes, dans lequel la composition eutectique est pourvu d'un support.

8. Soufflet de ressort pneumatique formé par l'un quelconque des procédés selon les revendications précédentes.

9. Ressort pneumatique comportant le soufflet de ressort pneumatique selon la revendication 8.
